# EUROPEAN PATENT APPLICATION

(11) **EP 1 034 871 A2**
(43) Date of publication of application: **13.09.2000**
(21) Application number: 00850040.7
(22) Date of filing: 06.03.2000
(51) Int. Cl.: B23D 61/12

(54) **Bandsaw blade having set teeth and exhibiting reduced lateral force**

(30) Priority: 11.03.1999 US 265851
(71) Applicant: Kapman AB, 811 81 Sandviken (SE)
(72) Inventor: Hickey, Darren, Trumbull, CT 06611 (US)
(74) Representative: Taquist, Lennart

(57) **Abstract**

A bandsaw blade (10) includes set teeth (14,16) each having a side relief angle (16) and a lateral rake angle (18). The side relief angle (16) should be positive for all metal cutting; for cutting in tough deformation-hardening materials the angel (16) should be at least 15 degrees, to avoid a hardening of the cut surfaces and to keep cutting forces low. This can normally be achieved by letting the hammer of the setting machine strike the tooth only near the rake face (20) and near the top (tip) T of the tooth, which thereby causes the tooth to twist during setting. The lateral rake angle (18) near the tip of the tooth is between 5 and 10 degrees negative to minimize the size of lateral forces during cutting.

According to the invention, the side clearance angle (16) and the lateral rake angle (18) of the set teeth can be chosen independently of one another by performing a grinding operation on the front rake force (20) of a blank (10B) prior to the setting operation. That is, as shown in Figs. 2 and 3, at least the upper part of the front rake face (20) is ground at an acute angle (22) relative to a transverse line L extending perpendicular to a centerline CL. The angle (22) corresponds to the desired difference between the side clearance angle (16) and the lateral rake angle (18). The angle (22) is preferably at least 5 degrees.

In accordance with the invention, the side relief angle can be made large enough to keep the cutting forces low and avoid a hardening of the cut surfaces, while the lateral rake angle can be made low enough to minimize lateral forces generated during cutting.

## Description

### Background of the Invention

The present invention relates to bandsaw blades having set teeth.

Bandsaw blades are used to cut materials with very different properties and with very different cutting action involved in forming chips from the material to be cut. Metal, polymers and other fairly homogeneous materials are cut with saw teeth producing more or less continuous streams of chips where the chip is separated from the workpiece by the action of one edge. Fibrous materials such as wood are preferably cut with saw teeth acting in several steps, including first cutting of the fibers by the scoring action of sharp knife-like points of two consecutive scoring teeth, leaving a chip with fibers cut at both ends and more or less loosened from the workpiece by cracking and bending of the fibers therebetween. Forces on the scoring teeth vary strongly with time, since the fibers are cut individually. This can sometimes be followed by removing of the chip by a scraping tooth with an edge parallel to the fibers as shown in Granberg U.S. Patent No. 754,134.

For homogeneous materials the cutting force is often higher than for fibrous materials, but less varying. The force and its direction are strongly dependent on the shape of the cutting edge, its slope, its rake angle and its clearance angle. This is especially important when the teeth have welded-on carbide tips, since the weld will accept large forces in the main plane of the saw blade, but is brittle and vulnerable to lateral force components.

For bandsaw blades used in the cutting of hard or difficult-to-machine materials, it is important to design the edge and its adjoining surfaces to minimize the lateral forces, and the resulting change in setting width. This will tend to ensure straight cuts, since twisting and bending of the saw blade will then be less. The lateral force on a tooth consists of a pressure component and a friction force on the rake face along the top crosswise cutting edge, and a pressure on the side of the tooth. The total force can be minimized by choosing a suitable lateral rake angle, usually a small negative angle.

This must not be confused with minimizing the cutting force for a tooth for the cross-cutting of wood, where the cutting force is produced along the side edge, and is minimized by choosing a sharp side edge with a large positive rake angle, 25 to 50 degrees.

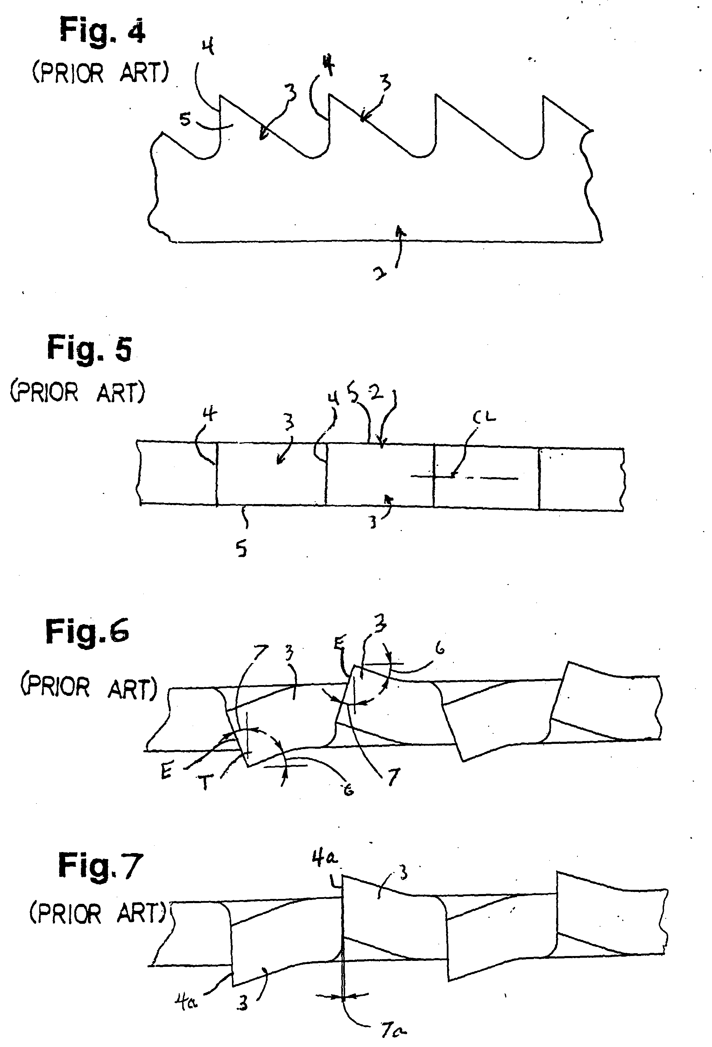

None of the two methods presently used to produce bandsaw blades (or even hacksaw blades) with set teeth will keep the lateral forces low enough. The most common method is depicted in Figs. 4-6 wherein a blank (2), depicted before a setting operation in Figs. 4 and 5, includes teeth (3), each tooth having a rake face (4), and a clearance face (5). The rake faces (4) have been formed by grinding or milling in a direction perpendicular to a center line CL of the blank. The clearance faces (5) have been formed by grinding or milling in a direction parallel to the centerline CL. When the tooth is then set, the tip T of the tooth will be twisted (see Fig. 6). The edge E will thus lean over to the side as desired, to direct chips towards the center during a cutting operation. Each set tooth will exhibit a side relief angle (6), and a lateral rake angle (7). Those angles (6,7) will be equal to one another, since the surfaces (4,5) are perpendicular to one another. The side relief angle (6) should be positive for all metal cutting, and for tough deformation-hardening materials it should be at least 15 degrees in magnitude to avoid a hardening of the cut surfaces, and to keep the cutting forces low. However, a lateral rake angle (7) of that magnitude will result in a large local lateral force being generated at the outer corner of the tooth during a cutting operation. This is unsuitable for cutting tough materials and would result in high friction, high cutting force, and a hardening of the cut surfaces.

The other commonly used method is shown in Figs. 4, 5 and 7 and involves a crosswise grinding of the rake and clearance faces after setting of a roughly punched blade blank as disclosed in DE GM 88 07350 or U.S. Patent No. 5,410,935. As a result, the lateral rake angle (7a) will be nearly zero. This may make the cutting force unstable with an occasionally negative lateral component which might cause the side edge to shift laterally into the material (i.e., laterally self-feeding), and will also make the remaining tip too thin and fragile near the outer comer unless the main relief angle is very small, which would increase the cutting force. The lateral shifting could cause vibrations, instability, and corrugated cut surfaces

### Summary of the Invention

The invention relates to bandsaw blades, and to a method of manufacturing bandsaw blades.

The bandsaw comprises a plurality of set teeth which are set to opposite respective sides of the blade. Each set tooth includes a negative lateral rake angle of at least 5 degrees, and a side relief angle which is larger than the lateral rake angle.

The lateral rake angle is preferably from 5 to 10 degrees, and the side clearance is at least 5 degree larger than the lateral rake angle.

The method of manufacturing a bandsaw blade comprises the steps of:
A) providing a blank having a plurality of teeth, at least some of the teeth having a front rake face;
B) shaping at least some of the teeth such that at least an upper portion of the front rake face thereof forms an acute angle with a line extending perpendicular to a centerline of the blank; and thereafter
C) setting the at least some teeth to respective sides of the blank,
whereby a lateral rake angle of the set teeth is smaller than a side relief angle thereof.

Preferably, the acute angle is formed by grinding the front rake faces, and the acute angle is preferably at least 5 degrees.

The side relief angle is at least 5 degrees larger than the lateral rake angle which is preferably in the range of 5 to 10 degrees.

### Brief Description of the Drawing

The objects and advantages of the invention will become apparent from the following detailed description of a preferred embodiment thereof in connection with the accompanying drawing in which like numerals designate like elements and in which:
Fig. 1 is a top plan view of a portion of a bandsaw blade according to the present invention;
Fig. 2 is a top plan view of a blank from which the bandsaw blade of Fig. 1 is produced;
Fig. 3 is a side elevational view of the blank depicted in Fig. 2;
Fig. 4 is a side elevational view of a conventional blank;
Fig. 5 is a top plan view of the conventional blank depicted in Fig. 4;
Fig. 6 is a top plan view of one type of conventional bandsaw blade made from the blank of Figs. 4, 5; and
Fig. 7 is a top plan view of another type of conventional bandsaw blade made from the blank of Figs 4, 5.

### Detailed Description of a Preferred Embodiment of the Invention

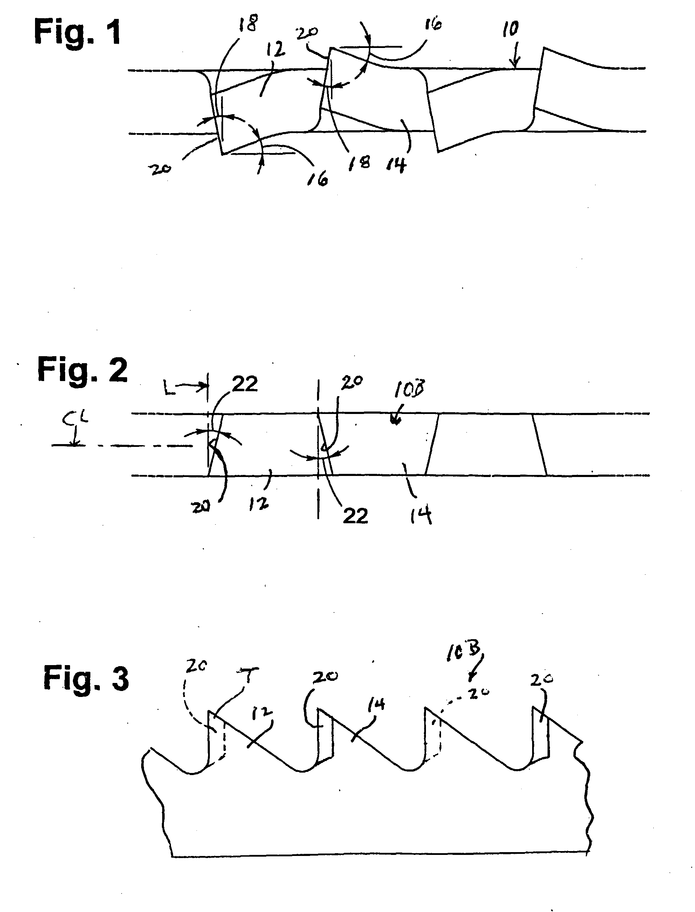

Fig. 1 shows a section of a bandsaw blade (10) including set teeth (14, 16) each having a side relief angle (16) and a lateral rake angle (18). The side relief angle (16) should be positive for all metal cutting; for cutting in tough deformation-hardening materials the angel (16) should be at least 15 degrees, to avoid a hardening of the cut surfaces and to keep cutting forces low. This can normally be achieved by letting the hammer of the setting machine strike the tooth only near the rake face (20) and near the top (tip) T of the tooth, which thereby causes the tooth to twist during setting. The lateral rake angle (18) near the tip of the tooth is between 5 and 10 degrees negative to minimize the size of lateral forces during cutting.

According to the invention, the side clearance angle (16) and the lateral rake angle (18) of the set teeth can be chosen independently of one another by performing a grinding operation on the front rake force (20) of a blank (10B) prior to the setting operation. That is, as shown in Figs. 2 and 3, at least the upper part of the front rake face (20) is ground at an acute angle (22) relative to a transverse line L extending perpendicular to a centerline CL. The angle (22) corresponds to the desired difference between the side clearance angle (16) and the lateral rake angle (18). The angle (22) is preferably at least 5 degrees.

The grinding of the blank (10B) can be done with precision, since it is easy to index the grinding machine on a straight tooth to ensure a sharp edge on the rake face. It would be much more difficult to grind a lateral rake angle after setting, since the deflection of the tooth during setting depends on the distance to its neighbors, which may vary from one tooth to another. There would then be too great a risk of either removing too little material and getting an edge chamfer without adjustment of the angle, or removing too much material which would make the tooth too low and impair the cutting effect of its main edge.

As noted above, the lateral rake angle (18) is negative and is at least 5 degrees (preferably 5-10 degrees), and the side relief angle (16) is larger than the lateral rake angle, preferably by at least 5 degrees. The side relief angle (16) is most preferably at least 15 degrees.

In accordance with the invention, the side relief angle can be made large enough to keep the cutting forces low and avoid a hardening of the cut surfaces, while the lateral rake angle can be made low enough to minimize lateral forces generated during cutting.

Although the present invention has been described in connection with a preferred embodiment thereof, it will be appreciated by those skilled in the art that additions, deletions, modifications, and substitutions not specifically described may be made without departing from the spirit and scope of the invention as defined in the appended claims.

## Claims

1. A bandsaw blade comprising a plurality of set teeth set to opposite respective sides of the blade, each set tooth including a negative lateral rake angle of at least 5 degrees and a side relief angle which is larger than the lateral rake angle.

2. The bandsaw blade according to claim 1 wherein the lateral rake angle is from 5 to 10 degrees.

3. The bandsaw blade according to claim 2 wherein the side relief angle is at least five degrees larger than the lateral rake angle.

4. The bandsaw blade according to claim 3 wherein the side relief angle is at least 15 degrees.

5. A method of manufacturing a bandsaw blade comprising the steps of:
A) providing a blank having a plurality of teeth including a front rake face,
B) shaping at least some of the teeth such that at least an upper portion of the front rake face thereof forms an acute angle with a line extending perpendicular to a centerline of the blank; and thereafter
C) setting the at teeth shaped in step B, to respective sides of the blank,
whereby a lateral rake angle of each set tooth is smaller than a side relief angle thereof.

6. The method according to claim 5 wherein step B is performed by grinding.

7. The method according to claim 5 wherein the acute angle is at least 5 degrees.

8. The method according to claim 5 wherein the side relief angle is at least 5 degrees larger than the lateral rake angle.

9. The method according to claim 8 wherein the lateral rake angle is in the range of 5 to 10 degrees.

10. The method according to claim 9 wherein the side relief angle is at least 15 degrees.
